# NEUE EUROPÄISCHE PATENTSCHRIFT

(11) **EP 1 544 182 B2**
(45) Veröffentlichungstag und Bekanntmachung des Hinweises auf die Entscheidung über den Einspruch: **06.04.2016**
(45) Hinweis auf die Patenterteilung: 14.06.2006
(21) Anmeldenummer: 03028471.5
(22) Anmeldetag: 12.12.2003
(51) Int. Cl.: C04B 28/02, C04B 22/14

(54) **Hydraulisches Bindemittel**
Hydraulic binder
Liant hydraulique

(43) Veröffentlichungstag der Anmeldung: 22.06.2005
(73) Patentinhaber: Kehrmann, Alexander, 46509 Xanten (DE); crenox GmbH, 47829 Krefeld (DE)
(72) Erfinder: Alexander Kehrmann, 47053 Duisburg (DE)
(74) Vertreter: Hoffmann Eitle

(56) Entgegenhaltungen:
- EP-A- 1 314 706
- EP-A1- 0 054 314
- EP-A1- 0 160 747
- WO-A-84/02900
- WO-A1-96/33133
- WO-A1-2005/009917
- DD-A1- 206 984
- DD-A5- 212 727
- DE-A- 10 014 468
- DE-A1- 10 332 530
- DE-T2- 69 703 675
- DE-U1- 20 311 049
- US-A- 2 307 270
- US-A- 4 572 739
- MANNS W.; LASKOWSKI C.: 'Eisen(II)sulfat als Zusatz zur Chromatreduzierung' BETONTECHNOLOGIE Februar 1999, Seiten 78 - 85
- WASSING W.; BAETZNER S.: 'Technischer Bericht TB-ZCH-044/2005', Oktober 1999, FERRO DUO GMBH vol. 'Hinweise zur Herstellung chromatarmer Werkmörtel', Seiten 1 - 11
- MITCHELL A.G.: 'The preparation and characterization of ferrous sulphate' J.PHARM.PHARMACOL. Bd. 36, 1984, VANCOUVER, Seiten 506 - 510

## Beschreibung

Die Erfindung betrifft ein hydraulisches Bindemittel mit dem Hauptbestandteil Zement, dem zur Chromatreduzierung Eisen(II)sulfat zugegeben ist, sowie einen Chromatreduzierer und dessen Verwendung.

Zement kommt in der Baustoffindustrie als fein gemahlenes hydaulisches Bindemittel zur Herstellung von Beton, Mörtel, Betonsteinen und Fertigteilen zur Anwendung. Bei der Verarbeitung des Zements ist nachteilig, dass dieser aufgrund seines Chromatgehalts aller-gieauslösend für Hautekzeme wirken kann. Hierbei ist insbesondere das lösliche Chromat die Ursache der allergischen Reaktionen.

Bekannt ist es, Eisen(II)sulfat als Chromatreduziererdes im Zement in Spuren vorliegenden Chromat (VI) einzusetzen. Das Eisen(II)sulfat reduziert das lösliche Chrom(VI) in unlösliches Chrom(III). Hierdurch können gesundheitliche Beeinträchtigungen vermieden werden. Der Einsatzvon Eisen(II)sulfatals Zusatz im Zement zur Chromatreduzierung ist beispielsweise in der DE 197 44 035 A1 oder der EP 1 314 706 A2 beschrieben. Die gleiche Problematik wird behandelt in Manns, W.; Laskowski, Ch.: Eisen(II)sulfat als Zusatz zur Chromatreduzierung in BE-Z: Beton, H. 2/1999, S. 78-85.

Grundsätzlich ist festzustellen, dass die Reaktionsfähigkeit des Eisen(II)sulfats im Zement mit zunehmender Lagerungsdauerbzw. Alterung abnimmt. Die übliche Lagerungsfähigkeitvon chromatarmem Zement beträgt drei bis maximal sechs Monate. Bei Überschreiten der Verfallszeit darf der Zement im Grunde genommen nicht mehr verwendet werden, weil der Chromatanteil im Zement dann über der gesetzlich zulässigen Norm von 2 ppm liegt.

Zu bemerken ist auch, dass sich der Einsatz von Eisen(II)sulfat, insbesondere wenn dieses aufwendig aufbereitet wird, bevor es dem Zement zugegeben wird, nachteilig auf die Kosten des hydraulischen Bindemittels auswirkt.

Der Erfindung liegt daher, ausgehend vom Stand der Technik, die Aufgabe zugrunde, ein anwendungstechnisch mindestens gleichwertiges, jedoch kostenmäßig günstigeres chromatarmes hydrauisches Bindemittel mit einer hohen Lagerungs- bzw. Alterungsbeständigkeit zu schaffen sowie einen für den praktischen Einsatz verbesserten Chromatreduzierer und dessen Verwendung aufzuzeigen.

Die Lösung des das hydraulische Bindemittel betreffenden Teils der Aufgabe zeigt Patentanspruch 1 auf. Der erfindungsgemäße Chromatreduzierer ist in Patentanspruch 14 charakterisiert. Auf die Verwendung des erfindungsgemäßen Chromatreduzierers zielt Patentanspruch 17 ab.

Erfindungsgemäß kommt ein ChromatreduziererzurAnwendung, welcherzwei Eisen(II)sulfat-Komponenten enthält. Die erste Komponente besteht aus Filtersalz aus der Titandioxidproduktion, dem ein mineralischer Saüreregulator zugegeben ist. Die zweite Komponente ist Grünsalz.

Feuchtes Grünsalz (Eisen(II)sulfat-heptahydrat) fällt als Abfall oder Nebenprodukt bei verschiedenen industriellen Prozessen, beispielsweise der Titandioxidherstellung aus Titanerz, an. Bei der Titandioxidherstellung nach dem Sulfatverfahren wird das fein gemahlene Titanerz mit konzentrierter Schwefelsäure aufgeschlossen. Das im Erz enthaltene Eisendioxid reagiert zu Eisensulfat, das Titanerz zu Titansulfat. Die Abtrennung des Eisensulfats vom Titansulfat erfolgt durch Kristallisation. Aufgrund der höheren Wasserlöslichkeit kristallisiert das Eisensulfat zu grünem Eisen(II)sulfat aus und kann abgetrennt werden. Dieses sogenannte Grünsalz (Eisen(II)sulfat-heptahydrat) ist mithin ein Abfaliprodukt der Titandioxidherstellung. Es ist in der Konsistenz feucht, besitzt jedoch die gleichen chemischen Eigenschaften, insbesondere was die Chromat(VI)-Reduzierung anbelangt, wie trockenes, gemahlenes und aufbereitetes Eisen(II)sulfat. Dabei ist Grünsalz wesentlich kostengünstiger. Gleiches gilt für Filtersalz aus der Titandioxidprodukion. Hierbei handelt es sich um Eisen(II)sulfat-monohydrat. Da dieses jedoch einen sehr hohen Anteil an Schwefelsäure enthält, wird das Filtersalz erfindungsgemäß im Säuregehalt reduziert. Hierzu kommt ein mineralischer Säureregulator zum Einsatz, der mit dem Filtersalz gemischt wird. Der Säureregulator hat zusätzlich die Funktion, die rheologischen Eigenschaften, also die Fließeigenschaften des hydraulischen Bindemittels zu verbessern.

Vorzugsweise kommt als mineralischer Säureregulator gemahlener Kalkstein zur Anwendung, wie dies Patentanspruch 2 vorsieht. Dieser wird dem Filtersalz in einer Menge zwischen 3 Gew.% und 18 Gew.%, insbesondere zwischen 5 Gew.% und 15 Gew.%, zugegeben (Patentanspruch 3). Der gemahlene Kalkstein sollte hierbei eine Korngröße von 0 mm bis 2 mm besitzen.

Die 1. Eisen(II)sulfat-Komponente und die 2. Eisen(II)sulfat-Komponente werden in einem Verhältnis von 1:1 bis 1:5 gemischt. Zusätzlich wird ein inertes Trägermaterial zugegeben.

Durch die Mischung der 1. Eisen(II)sulfat-Komponente und der 2. Eisen(II)sulfat-Komponente und dem Trägermaterial erhält man ein rieselfähiges Produkt. Das Trägermaterial hat innerhalb der Mischung die Funktion der Trocknung und die eines Feuchtigkeitspuffers bzw. -regulators. Die Trocknungs- und Pufferwirkung des Trägermaterials gewährleistet eine optimale Einstellung der Mischung. Die Oxidation mit Luftsauerstoff wird vermieden ebenso wie ein Verklumpen. Eine aufwendige Aufbereitung oder Trocknung des Grünsalzes/Filtersalzes vor dessen Verarbeitung ist nicht erforderlich. Die Feuchtigkeitsregulierung übernimmt das Trägermatieral.

Bei dem erfindungsgemäßen hydraulischen Bindemittel ist schädliches Chromat wirksam reduziert. Das Bindemittel besitzt eine hohe Lagerungs- und Alterungsbeständigkeit. Zudem ist es kostengünstig, da Eisen(II)sulfat-Komponenten aus industriellen Abprodukten verwendet werden.

Nach den Merkmalen von Patentanspruch 4 kann dem Gemisch aus Chromatreduzierer und Trägermaterial eine hydrophobe Substanz in Form von polymeren Alkoholen zugegeben werden. Diese Maßnahme trägt zur Erhöhung der Lagerstabilität des hydraulischen Bindemittels bei.

Die polymeren Alkohole werdern dem Gemisch aus Chromatreduzierer, bestehen aus den zwei Eisen(II) sulfat-Komponenten und dem Trägermaterial, zugegeben. Die Zugabe des polymeren Alkohols führt dazu, dass insbesondere das Eisen(II)sulfat eine geringere Affinität zu Feuchtigkeit bzw. Wasser hat und es sich darin weniger löst bzw. weniger benetzen lässt. Das Eisen(II) sulfat wird quasi durch die polymeren Alkohole umhüllt, so dass deren Säurecharakter länger erhalten bleibt. Insbesondere wird so die Reaktion mit dem basischen Zement, welche zu einer Neutralisierung des Säureeffekts führen würde, verringert. Das Eisen(II)sulfat behält damit länger seine Reduktionseigenschaften für Chrom.

Vorteilhafterweise bestehen die polymeren Alkohole auf Kunststoff- oder Zellulose-Basis, insbesondere in körniger oder flüssiger Form, wie dies Patentanspruch 5 vorsieht.

Als in der Praxis besonders gute hydrophobe Substanz wird ein Siloxan angesehen (Patentanspruch 6). Insbesondere ist ein niederviskoses Poly(methylhydrogen)siloxan mit Trimethylsilylendgruppen gut geeignet.

Vorteilhaft bei der Verwendung von Siloxan zur Hydrophobierung des Gemischs ist die schnelle Ausbildung des Silikonharz-Netzwerkes, die fehlende Flüchtigkeit und die geringe Alkoholabgabe bei der Reduktion, so dass es auch bei stark saugender Umgebung eine gute Wirksamkeit aufweist.

Der Anteil der hydrophoben Substanz, also der polymeren Alkohole in dem Gemisch aus Chromatreduzierer und inertem Trägermaterial, liegt zweckmäßigerweise zwischen 0,5 Gew.-% bis 10 Gew.-%, vorzugsweise zwischen 1 Gew.-% und 5 Gew.-%, bezogen auf die Menge des Gemisches.

Als inerte Trägermaterialien kommen feinkörnige oder pulverförmige Substrate mit großer OberflächenstrukturzurAnwendung, die hydroskopische Eigenschaften aufweisen, also Feuchtigkeit aufnehmen und auch abgeben können. Wird dem Gemisch eine hydrophobe Substanz zugegeben, werden die hydrophoben Eigenschaften der polymeren Alkohole und die der hydroskopischen Eigenschaften des Trägermaterials kombiniert.

Als besonders gutes Trägermaterial wird gemäß Patentanspruch 7 ein Silicagel angesehen. Bei Silicagel, auch Kieselgel genannt, handelt es sich um eine festamorphe Kieselsäure, deren Einsatz als Adsorptionsmittel für Gase, Dämpfe und Flüssigkeiten grundsätzlich bekannt ist. Es lässt sich mit verschiedenen Porendurchlässen herstellen. Silicagel absorbiert Feuchtigkeit auf seiner großen inneren Oberfläche, die bis zu 800 m²/g betragen kann.

Auch Tonerde, insbesondere Aktivtonerde, kann als Trägermaterial gemäß Patentanspruch 8 zum Einsatz gelangen. Aktivierte Tonerde ist aktiviertes Aluminiumoxid (Al₂O₃). Es handelt sich um ein natürliches Tonmineral (Bentonit) in bröseliger Form mit ähnlichen Adsorptionseigenschaften für Feuchtigkeit wie Silikagel.

In praktischen Versuchen hat sich herausgestellt, dass auch Trockensand mit einer Körnung zwischen 0,1 mm und 0,4 mm sehr gute Eigenschaften als Trägermaterial in der Mischung besitzt (Patentanspruch 9.)

Ein weiteres alternatives Trägermaterial ist in Patentanspruch 10 aufgezeigt, denn auch Katalysatorstaub hat als Trägermaterial gute Eigenschaften. Hierbei handelt es sich um Katalysatorstäube aus Claus-Prozessen, also aus Entschefelungsprozessen, insbesondere solchen in Erdöl- und Erdgasraffinerien. Diese werden innerhalb der Mischung als Trägermaterial eingesetzt. Auf diese Weise kann ein weiteres industrielles Abprodukt einer sinnvollen Weiterverarbeitung zugeführt werden. Auch Katalysatorstaub aus Claus-Prozessen zeichnet sich durch eine große innere Oberfläche und gutes Feuchtigkeitsadsorptionsvermögen aus.

Der Anteil an Trägermaterial bezogen auf die Menge Chromatreduzierer liegt gemäß den Merkmalen von Patentanspruch 11 zwischen 5 Gew.-% und 15 Gew.-%, insbesondere bei ca. 10 Gew.-%. In diesen Anteilen wird die Funktion des Trägermaterials als Feuchtigkeitspuffer bzw. -regulator zuverlässig erreicht.

Schließlich ist gemäß Patentanspruch 12 vorgesehen, dass das Gemisch aus Chromatreduzierer und Trägermaterial dem hydraulischen Bindemittel in einer Menge zwischen 0,01 Gew.-% bis 5,0 Gew.-%, insbesondere zwischen 0,2 Gew.-% bis 1 Gew.-% (Patentanspruch 13, bezogen auf die Zementmenge zugegeben wird. Hierdurch kann eine wirksame Reduktion des Chromatgehalts bis unterhalb der als gesundheitsbedenklich angesehenen Grenzwerte bewirkt werden.

Der erfindungsgemäße Chromatreduzierer zur Reduktion von wasserlöslichen Chromatgehalten in Zement besteht aus einer Mischung von Filtersalz aus der Titandioxidproduktion (Eisen(II)sulfat-monohydrat) dem ein mineralischer Säureregulator hinzugegeben ist, so wie Grünsalz (Eisen(II)sulfat-heptahydrat), wie dies Patentanspruch 14 vorsieht. Grundsätzlich können die Komponenten des Chromatreduzierers in beliebiger Reihenfolge gemischt werden.

Wie bereits weiter oben ausgeführt, kommt als mineralischer Säureregulierer im Rahmen der Erfindung gemäß Patentanspruch 15 gemahlener Kalkstein zur Anwendung. Der mineralische Säureregulator wird dem Chromatreduzierer in einer Menge zwischen 3 Gew.-% und 18 Gew.-%, vorzugsweise 5 Gew.% bis 15 Gew.-% bezogen auf die Menge Filtersalz (Eisen(II)sulfat-monohydrat) zugegeben (Patentanspruch 16). In praktischen Versuchen wurden gute Ergebnisse mit einem Chromatreduzierer erzielt, bei dem Filtersalz und Grünsalz in einem Verhältnis von 1:1 bis 1:5 unter Zugabe des mineralischen Säureregulators gemischt sind, wie dies Patentanspruch 17 vorsieht.

## Patentansprüche

1. Hydraulisches Bindemittel, welches Zement als Hauptbestandteil enthält, dem ein Gemisch aus einem Chromatreduzierer und einem Trägermaterial zugegeben ist, **dadurch gekennzeichnet, dass** der Chromatreduzierer zwei Eisen(II)sulfat-Komponenten enthält, wobei die 1. Komponente aus Filtersalz aus der Titandioxidproduktion besteht, dem ein mineralischer Säureregulator zugegeben ist, und die 2. Komponente Grünsalz ist, wobei die 1. Komponente und die 2. Komponente in einem Verhältnis von 1 : 1 bis 1 : 5 gemischt sind.

2. Hydraulisches Bindemittel nach Anspruch 1, **dadurch gekennzeichnet, dass** der mineralische Säureregulator gemahlener Kalkstein ist.

3. Hydraulisches Bindemittel nach einem der Ansprüche 1 bis 2, **dadurch gekennzeichnet, dass** der mineralische Säureregulator in einer Menge zwischen 3,0 Gew.-% und 18 Gew.-%, bezogen auf die Menge Filtersalz, zugegeben ist.

4. Hydraulisches Bindemittel nach einem der Ansprüche 1 bis 3, **dadurch gekennzeichnet, dass** dem Gemisch eine hydrophobe Substanz in Form von polymeren Alkoholen zugegeben ist.

5. Hydraulisches Bindemittel nach Anspruch 4, **dadurch gekennzeichnet, dass** die polymeren Alkohole auf Kunststoffoder Cellulose-Basis in körniger oder flüssiger Form bestehen.

6. Hydraulisches Bindemittel nach einem der Ansprüche 1 bis 3, **dadurch gekennzeichnet, dass** dem Gemisch eine hydrophobe Substanz in Form von Siloxan zugegeben ist.

7. Hydraulisches Bindemittel nach einem der Ansprüche 1 bis 6, **dadurch gekennzeichnet, dass** das Trägermittel ein Silicagel ist.

8. Hydraulisches Bindemittel nach einem der Ansprüche 1 bis 6, **dadurch gekennzeichnet, dass** das Trägermaterial eine Tonerde ist.

9. Hydraulisches Bindemittel nach einem der Ansprüche 1 bis 6, **dadurch gekennzeichnet, dass** das Trägermittel ein Trockensand mit einer Körnung zwischen 0,1 mm und 0,4 mm ist.

10. Hydraulisches Bindemittel nach einem der Ansprüche 1 bis 6, **dadurch gekennzeichnet, dass** das Trägermaterial ein Katalysatorstaub aus Claus-Prozessen ist.

11. Hydraulisches Bindemittel nach einem der Ansprüche 1 bis 10, **dadurch gekennzeichnet, dass** das Gemisch Trägermaterial in einer Menge zwischen 5 Gew.-% bis 15 Gew.-%, bezogen auf die Menge Chromatreduzierer, enthält.

12. Hydraulisches Bindemittel nach einem der Ansprüche 1 bis 11, **dadurch gekennzeichnet, dass** das Gemisch in einer Menge zwischen 0,01 Gew.-% bis 5,0 Gew.-% bezogen auf die Zementmenge, zugegeben ist.

13. Hydraulisches Bindemittel nach Anspruch 12, **dadurch gekennzeichnet, dass** das Gemisch in einer Menge zwischen 0,2 Gew.-% bis 1,0 Gew.-% bezogen auf die Zementmenge zugegeben ist.

14. Chromatreduzierer auf Basis von Eisen(II)sulfat, **dadurch gekennzeichnet, dass** der Chromatreduzierer aus einer Mischung von zwei Eisen(II)sulfat-Komponenten besteht, wobei die erste Eisen(II)sulfat-Komponente Filtersalz aus der Titandioxidproduktion ist, dem ein mineralischer Säureregulator zugegeben ist, und die zweite Eisen(II)sulfat-Komponente Grünsalz ist, wobei die 1. Komponente und die 2. Komponente in einem Verhältnis von 1 : 1 bis 1 : 5 gemischt sind.

15. Chromatreduzierer nach Anspruch 14, **dadurch gekennzeichnet, dass** der mineralische Säureregulator gemahlener Kalkstein ist.

16. Chromatreduzierer nach Anspruch 14 oder 15, **dadurch gekennzeichnet, dass** der mineralische Säureregulator in einer Menge zwischen 3,0 Gew.-% und 18 Gew.-%, bezogen auf die Menge Filtersalz, zugegeben ist.

17. Verwendung eines Gemisches auf Eisen(II)sulfat in Form von Filtersalz aus der Titandioxidproduktion, dem ein mineralischer Säureregulator zugegeben ist, sowie Eisen(II)sulfat in Form von Grünsalz als Chromatreduzierer zur Reduktion von wasserlöslichen Chromatgehalten in Zement, wobei die 1. Komponente und die 2. Komponente in einem Verhältnis von 1 : 1 bis 1 : 5 gemischt sind.

## Claims

1. Hydraulic binder which contains cement as the main constituent, to which a mixture of a chromate reducer and a carrier material is added, **characterised in that** the chromate reducer contains two iron(II) sulphate components, wherein the 1^{st} component consists of filter salt from titanium dioxide production to which a mineral acid regulator is added, and the 2^{nd} component is green salt, wherein the 1^{st} component and the 2^{nd} component are mixed in a ratio from 1:1 to 1:5.

2. Hydraulic binder according to claim 1, **characterised in that** the mineral acid regulator is ground limestone.

3. Hydraulic binder according to one of claims 1 to 2, **characterised in that** the mineral acid regulator is added in a quantity between 3.0 wt.% and 18 wt.%, based on the quantity of filter salt.

4. Hydraulic binder according to one of claims 1 to 3, **characterised in that** a hydrophobic substance in the form of polymeric alcohols is added to the mixture.

5. Hydraulic binder according to claim 4, **characterised in that** the plastic-based or cellulose-based polymeric alcohols exist in granular or liquid form.

6. Hydraulic binder according to one of claims 1 to 3, **characterised in that** a hydrophobic substance in the form of siloxane is added to the mixture.

7. Hydraulic binder according to one of claims 1 to 6, **characterised in that** the carrier material is a silica gel.

8. Hydraulic binder according to one of claims 1 to 6, **characterised in that** the carrier material is an aluminium oxide.

9. Hydraulic binder according to one of claims 1 to 6, **characterised in that** the carrier material is a dry sand with a grain size between 0.1 mm and 0.4 mm.

10. Hydraulic binder according to one of claims 1 to 6, **characterised in that** the carrier material is a catalyst dust from Claus processes.

11. Hydraulic binder according to one of claims 1 to 10, **characterised in that** the mixture contains carrier material in a quantity between 5 wt.% to 15 wt.% based on the quantity of chromate reducer.

12. Hydraulic binder according to one of claims 1 to 11, **characterised in that** the mixture is added in a quantity between 0.01 wt.% to 5.0 wt.%, based on the quantity of cement.

13. Hydraulic binder according to claim 12, **characterised in that** the mixture is added in a quantity between 0.2 wt.% to 1.0 wt.%, based on the quantity of cement.

14. Chromate reducer based on iron(II) sulphate, **characterised in that** the chromate reducer consists of a mixture of two iron(II) sulphate components, wherein the first iron(II) sulphate component is filter salt from titanium dioxide production to which a mineral acid regulator is added, and the second iron(II) sulphate component is green salt, wherein the 1^{st} component and the 2^{nd} component are mixed in a ratio from 1:1 to 1:5.

15. Chromate reducer according to claim 14, **characterised in that** the mineral acid regulator is ground limestone.

16. Chromate reducer according to claim 14 or 15, **characterised in that** the mineral acid regulator is added in a quantity between 3.0 wt.% and 18 wt.%, based on the quantity of filter salt.

17. Use of a mixture of iron(II) sulphate in the form of filter salt from titanium dioxide production to which a mineral acid regulator is added, and iron(II) sulphate in the form of green salt as chromate reducer for the reduction of water-soluble chromate contents in cement, wherein the 1^{st} component and the 2^{nd} component are mixed in a ratio from 1:1 to 1:5.

## Revendications

1. Liant hydraulique qui contient du ciment comme composant principal, auquel est ajouté un mélange d'un réducteur de chromate et d'un matériau support, **caractérisé en ce que** le réducteur de chromate contient deux composants de sulfate de fer (II), le premier composant étant constitué de sel de filtration issu de la production du dioxyde de titane, auquel est ajouté un régulateur minéral d'acidité, et le deuxième composant étant un sel cru, le 1^{er} et le 2^{e} composants étant mélangés dans un rapport entre 1:1 et 1:5.

2. Liant hydraulique selon la revendication 1, **caractérisé en ce que** le régulateur minéral d'acidité est du calcaire broyé.

3. Liant hydraulique selon l'une des revendications 1 à 2, **caractérisé en ce que** le régulateur minéral d'acidité est ajouté à hauteur d'entre 3,0 % et 18 % en poids de la quantité de sel de filtration.

4. Liant hydraulique selon l'une des revendications 1 à 3, **caractérisé en ce qu'**une substance hydrophobe sous forme d'alcools polymères est ajoutée au mélange.

5. Liant hydraulique selon la revendication 4, **caractérisé en ce que** les alcools polymères sont à base de plastique ou de cellulose sous forme granuleuse ou liquide.

6. Liant hydraulique selon l'une des revendications 1 à 3, **caractérisé en ce qu'**une substance hydrophobe sous forme de siloxane est ajoutée au mélange.

7. Liant hydraulique selon l'une des revendications 1 à 6, **caractérisé en ce que** le matériau support est un gel de silice.

8. Liant hydraulique selon l'une des revendications 1 à 6, **caractérisé en ce que** le matériau support est de l'alumine.

9. Liant hydraulique selon l'une des revendications 1 à 6, **caractérisé en ce que** le matériau support est un sable sec avec une granulométrie entre 0,1 mm et 0,4 mm.

10. Liant hydraulique selon l'une des revendications 1 à 6, **caractérisé en ce que** le matériau support est une poudre de catalyseur des procédés de Claus.

11. Liant hydraulique selon une des revendications 1 à 10, **caractérisé en ce que** le mélange contient le matériau support à hauteur d'entre 5 % et 15 % en poids de la quantité de réducteur de chromate.

12. Liant hydraulique selon une des revendications 1 à 11, **caractérisé en ce que** le mélange est ajouté à hauteur d'entre 0,01 % et 5,0 % en poids de la quantité de ciment.

13. Liant hydraulique selon la revendication 12, **caractérisé en ce que** le mélange est ajouté à hauteur d'entre 0,2 % et 1,0 % en poids de la quantité de ciment.

14. Réducteur de chromate à base de sulfate de fer (II), **caractérisé en ce que** le réducteur de chromate se compose d'un mélange de deux composants de sulfate de fer (II), le premier composant de sulfate de fer (II) étant un sel de filtration issu de la production du dioxyde de titane, auquel est ajouté un régulateur minéral d'acidité, et le deuxième composant de sulfate de fer (II) étant un sel cru, le 1^{er} et le 2^{e} composants étant mélangés dans un rapport entre 1:1 et 1:5.

15. Réducteur de chromate selon la revendication 14, **caractérisé en ce que** le régulateur minéral d'acidité est du calcaire broyé.

16. Réducteur de chromate selon la revendication 14 ou 15, **caractérisé en ce que** le régulateur minéral d'acidité est ajouté à hauteur d'entre 3,0 % et 18 % en poids de la quantité du sel de filtration.

17. Utilisation d'un mélange de sulfate de fer (II) sous forme de sel de filtration issu de la production de dioxyde de titane, auquel est ajouté un régulateur minéral d'acidité, ainsi que de sulfate de fer (II) sous forme de sel cru comme réducteur de chromate pour la réduction des teneurs en chromate hydrosolubles dans du ciment, le 1^{er} et le 2^{e} composants étant mélangés dans un rapport entre 1:1 et 1:5.
